# EUROPEAN PATENT APPLICATION

(11) **EP 4 156 041 A1**
(43) Date of publication of application: **29.03.2023**
(21) Application number: 20936897.6
(22) Date of filing: 21.05.2020
(51) Int. Cl.: G06N 99/00

(54) **INFORMATION PROCESSING DEVICE, WORK PLAN SPECIFYING METHOD, AND WORK PLAN SPECIFYING PROGRAM**

(71) Applicant: FUJITSU LIMITED, Kawasaki-shi, Kanagawa 211-8588 (JP)
(72) Inventor: TANIGUCHI, Jun, Kawasaki-shi, Kanagawa 211-8588 (JP); MARUYAMA, Kazunori, Kawasaki-shi, Kanagawa 211-8588 (JP); SOEDA, Takeshi, Kawasaki-shi, Kanagawa 211-8588 (JP)
(74) Representative: Hoffmann Eitle
(86) International application number: PCT/JP2020/020102
(87) International publication number: WO 2021/234903

(57) **Abstract**

An information processing device includes an execution unit that, by executing single-objective optimization with an evolutionary algorithm on a first objective function among a plurality of objective functions defined according to feeding orders of a plurality of objects into a work line, specifies first feeding orders in which values of the first objective function are better than an initial feeding order; by executing the single-objective optimization on a second objective function, specifies second feeding orders in which the values of the second objective function are better than the initial feeding order; and executes multi-objective optimization on the plurality of objective functions by using the first feeding orders and the second feeding orders.

## Description

### FIELD

The present application relates to an information processing device, a work plan specifying method, and a work plan specifying program.

### BACKGROUND

A technique intended to optimize the feeding order of products into a production line, in which a plurality of objective functions such as the production cost and the production completion time is optimized, is disclosed (refer to, for example, Patent Documents 1 and 2).

### CITATION LIST

### PATENT DOCUMENT

Patent Document 1: Japanese Laid-open Patent Publication No. 2017-10544
Patent Document 2: Japanese Laid-open Patent Publication No. 2004-30413

### SUMMARY

### [TECHNICAL PROBLEM]

However, the number of combinations in the feeding order of products into the production line is enormous. When multi-objective optimization with a plurality of objective functions set is performed, the solution space widens. Therefore, it involves long time to start a search from the initial feeding order as an initial solution and calculate a Pareto optimal solution set that contains candidates for the optimal solution.

In one aspect, it is an object of the present invention to provide an information processing device, a work plan specifying method, and a work plan specifying program capable of shortening the time until an optimal solution set is calculated.

### [SOLUTION TO PROBLEM]

In one mode, the information processing device is an information processing device that specifies a predetermined order under conditions that a plurality of objects is processed in a work line in the predetermined order, a plurality of works is performed in order on each of the plurality of objects in the work line, and at least part of the works among the plurality of works are different from each other between the plurality of objects, which includes an execution unit that: by executing single-objective optimization on a first objective function among a plurality of objective functions defined according to feeding orders of the plurality of objects into the work line, specifies first feeding orders in which values of the first objective function are better than an initial feeding order; by executing the single-objective optimization on a second objective function, specifies second feeding orders in which the values of the second objective function are better than the initial feeding order; and executes multi-objective optimization on the plurality of objective functions by using the first feeding orders and the second feeding orders.

According to an aspect of the embodiments, an information processing device that specifies a predetermined order under conditions that a plurality of objects is processed in a work line in the predetermined order, a plurality of works is performed in order on each of the plurality of objects in the work line, and at least part of the works among the plurality of works are different from each other between the plurality of objects, he information processing device comprising an execution unit that: by executing single-objective optimization on a first objective function among a plurality of objective functions defined according to feeding orders of the plurality of objects into the work line, specifies first feeding orders in which values of the first objective function are better than an initial feeding order; by executing the single-objective optimization on a second objective function, specifies second feeding orders in which the values of the second objective function are better than the initial feeding order; and executes multi-objective optimization on the plurality of objective functions by using the first feeding orders and the second feeding orders.

### [ADVANTAGEOUS EFFECTS OF INVENTION]

The time until an optimal solution set is calculated may be shortened.

### BRIEF DESCRIPTION OF DRAWINGS

FIG. 1 is a diagram illustrating a production line model;
FIGs. 2A and 2B are diagrams illustrating product information;
FIG. 3 is a diagram illustrating a solution search space;
FIG. 4 is a functional block diagram representing an overall configuration of an information processing device according to a first embodiment;
FIG. 5 is a flowchart representing an example of an optimized Pareto solution calculation process;
FIG. 6 is a diagram illustrating the optimized Pareto solution calculation process;
FIG. 7 is a diagram illustrating the optimized Pareto solution calculation process;
FIG. 8 is a diagram illustrating the optimized Pareto solution calculation process;
FIG. 9 is a diagram illustrating, in a simplified manner, an execution result of optimization of a feeding order plan when the number of products is assumed to be 100;
FIGs. 10A and 10B are simulation results;
FIG. 11 is a flowchart representing an example of an optimized Pareto solution calculation process;
FIG. 12 is a diagram illustrating the optimized Pareto solution calculation process;
FIG. 13 is a diagram illustrating the optimized Pareto solution calculation process;
FIG. 14 is a diagram illustrating the optimized Pareto solution calculation process;
FIG. 15 is a diagram illustrating the optimized Pareto solution calculation process;
FIG. 16 is a diagram illustrating a case where Lₘₐₓ is monitored while the number of initial solutions is gradually increased, and a convergence test is performed;
FIG. 17 is a diagram illustrating an image of rescheduling in a Gantt chart format;
FIG. 18 is a diagram illustrating an image of rescheduling in a Gantt chart format;
FIG. 19 is a flowchart representing an example of an optimized Pareto solution calculation process;
FIG. 20 is a flowchart representing an example of the optimized Pareto solution calculation process; and
FIG. 21 is a block diagram illustrating a hardware configuration of each unit of the information processing device.

### DESCRIPTION OF EMBODIMENTS

In recent years, the production process has become complicated due to high-mix low-volume production. In some cases, different devices are produced in different orders for each product, and the flow of goods sometimes becomes stagnant due to a large number of branches and merges between processes. Besides, every time the production situation changes due to machine trouble, response to rush order products, or the like, the impact of the stagnation expands, causing a delay in production time. To cope with these circumstances, even if an expensive processing device is introduced for the purpose of shortening the production time, it is difficult to completely renew the production facilities because the manufacturing cost will become higher. Apart from the above, the requests to production lines, such as the product quality, energy cost, and environmental impact, are diversifying, and it is important to formulate a production plan that fulfills all the requests.

Meanwhile, by digitizing the production line with software such as production line simulation and scheduler and inputting every piece of data at the time of formulating a production plan, the pre-verification of the production result of the product feeding order into the production line is enabled. If the conditions of the product feeding order are optimized by an algorithm (for example, a genetic algorithm (GA)) with the production completion time, production cost, and the like as objective functions, the predictive control of the production line is enabled on a model basis.

Here, an example of a line simulator will be described. First, an example of a production line model to be simulated by the line simulator will be described. The production line model contains branches and merges, and a plurality of products is fed one by one. For each of the plurality of products, a plurality of works is performed in order. At least part of the works are different between the plurality of products.

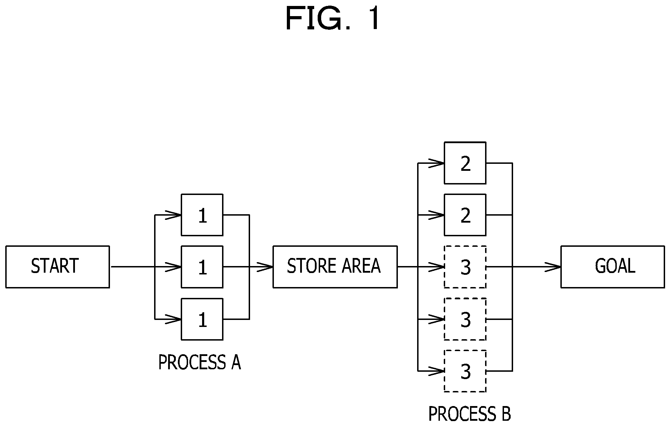

FIG. 1 is a diagram illustrating a production line model. The production line model in FIG. 1 is a flow shop type production line model constituted by a process A and a process B. When passing through the process A and the process B in accordance with the product feeding order, branching and merging are repeated, and finally shipping is carried out through inspection and packaging processes. A store area for keeping in-process products is secured between the process A and the process B. In the process A, three devices with the same specifications are installed. In the process B, two types of devices with different specifications made up of two and three devices are installed. The two devices in the process B have short processing time but involves a high manufacturing cost because the unit price of the devices is high. The three devices have long processing time but involves a low production cost because the three devices have been owned for a long time. For example, it is desired to generate a feeding order by multi-objective optimization intended to decrease the production cost while fulfilling the production completion time in order to meet the delivery date.

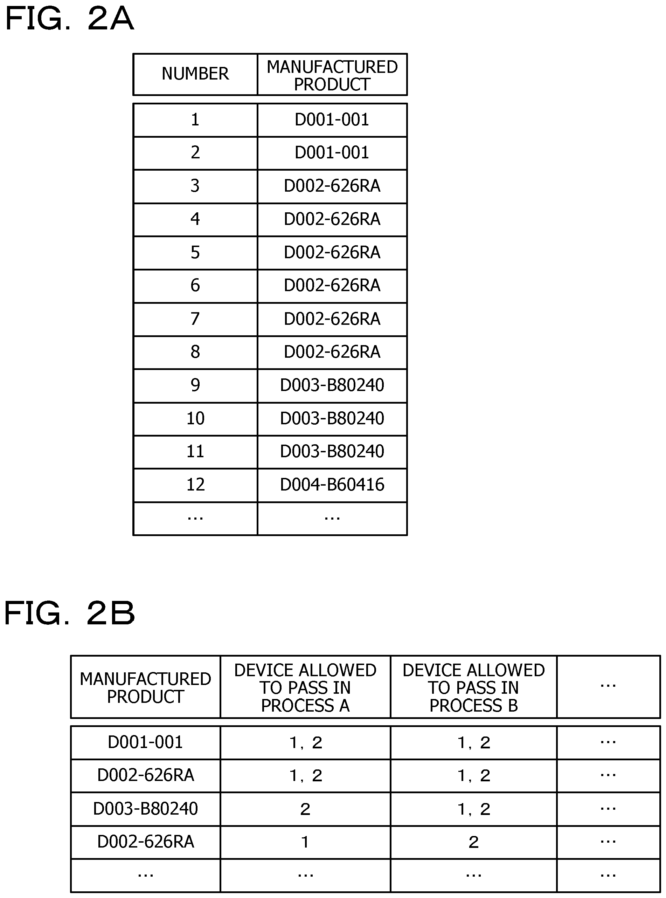

The line simulator divides such a production line model into slight spaces and executes a simple model computation such as flowing the product into the space instantly ahead when the space becomes vacant. At that time, the line simulator reads information on each product from a production master that stores information about each product. The production master stores, for example, a list of model numbers of products that have to be fed into the production line model, as illustrated in FIG. 2A. In addition, as illustrated in FIG. 2B, the production master stores, for example, information on devices that allow the products of each model number to pass in each process.

The product fed into the production line model stays in the device in each process for staying time in accordance with the information stored in the production master and passes through the device. As optimization indices (objective functions), the production completion time (the time from the start of feeding to when all products reach the goal), the maximum number of stores in the store area, the production cost, the device operation rate, the on-time delivery rate, and the like may be used. For example, by multiplying the staying time by a cost coefficient, the production cost until the product passes through the goal of the production line may be calculated. For example, the shorter the production completion time, the better. The smaller the maximum number of stores in the store area, the better. The lower the production cost, the better. The higher the device operation rate, the better. The higher the on-time delivery rate, the better.

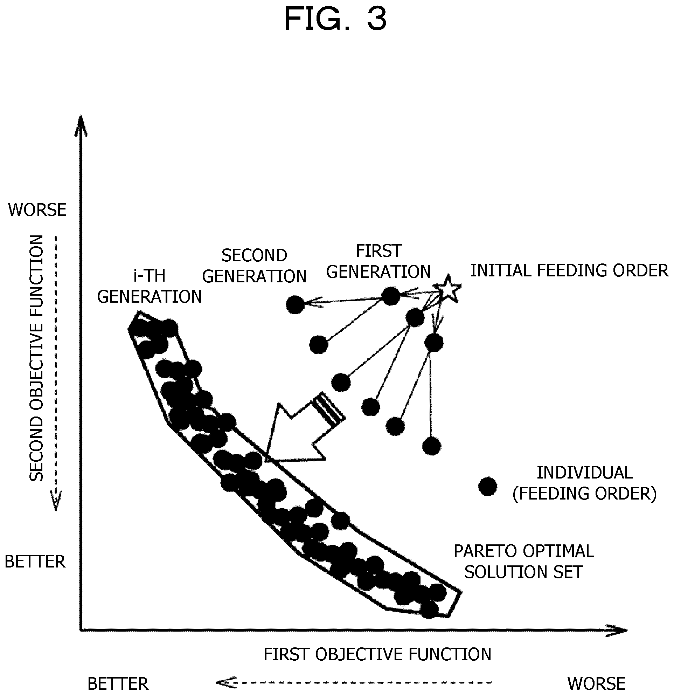

However, the number of combinations in the feeding order into the production line is enormous. When multi-objective optimization with a plurality of objective functions set is performed, the solution search space widens as illustrated in FIG. 3. Therefore, it involves long time to start a search from the initial feeding order and calculate a Pareto optimal solution set that contains candidates for the optimal solution.

Thus, in the following embodiments, an information processing device, a work plan specifying method, and a work plan specifying program capable of shortening the time until a Pareto optimal solution set is calculated will be described.

### [First Embodiment]

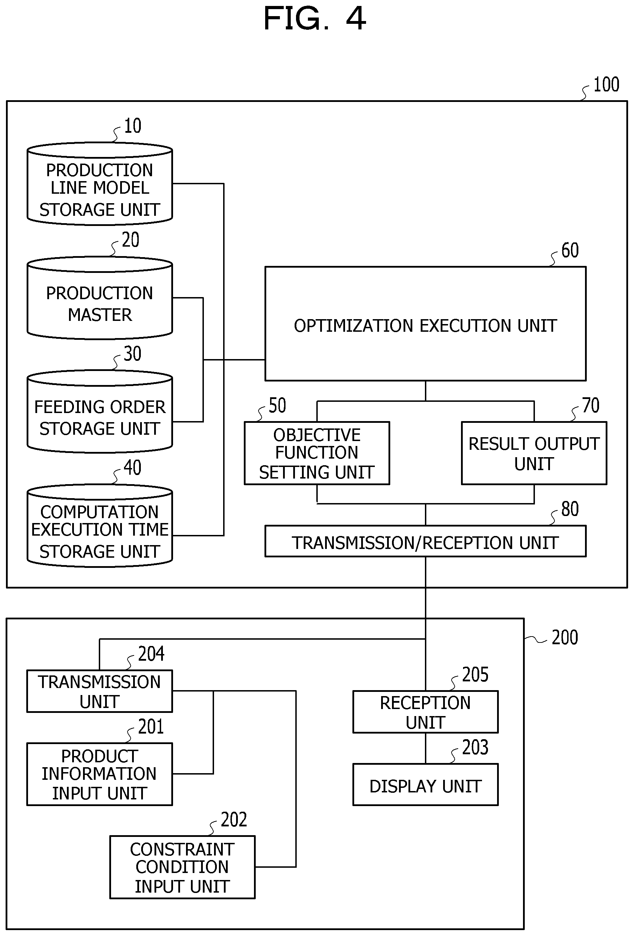

FIG. 4 is a functional block diagram representing an overall configuration of an information processing device 100 according to a first embodiment. The information processing device 100 is a server or the like for optimization processing. As illustrated in FIG. 4, the information processing device 100 includes a production line model storage unit 10, a production master 20, a feeding order storage unit 30, a computation execution time storage unit 40, an objective function setting unit 50, an optimization execution unit 60, a result output unit 70, a transmission/reception unit 80, and the like. In addition, a server 200 for displaying the optimization result may be included as an optimization result display device. The server 200 includes a product information input unit 201, a constraint condition input unit 202, a display unit 203, a transmission unit 204, a reception unit 205, and the like.

The production line model storage unit 10 stores a production line model as illustrated in FIG. 1. The production master 20 stores product information as illustrated in FIGs. 2A and 2B. The feeding order storage unit 30 stores the initial feeding order. The initial feeding order is, for example, an order obtained by arranging purchase orders as placed by customers and may be input in advance by a user using an input device. Alternatively, the initial feeding order may be generated by random numbers. Since the initial feeding order is generated without considering the objective functions, the initial feeding order often does not provide a good value for any objective function.

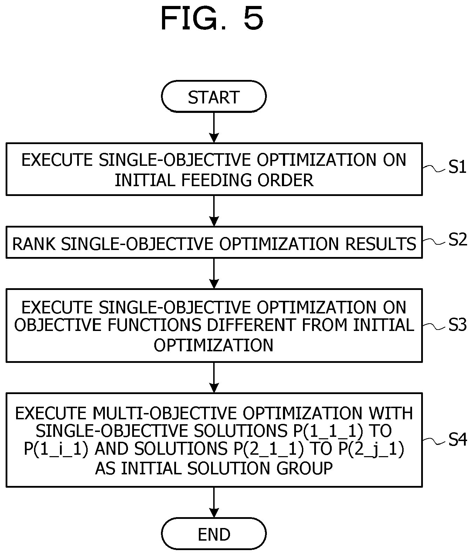

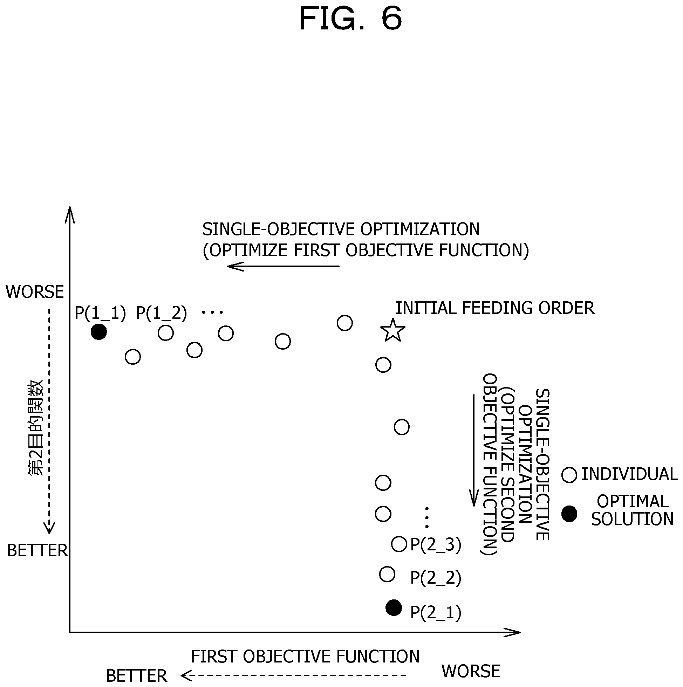

Hereinafter, an optimized Pareto solution calculation process will be described with reference to the flowchart in FIG. 5. First, the optimization execution unit 60 executes single-objective optimization on the initial feeding order for each objective function (step S1). As an example, two objective functions, namely, a first objective function and a second objective function will be used. The objective functions are set by the objective function setting unit 50. As an example, the first objective function is the production cost, and the second objective function is the production completion time. In FIG. 6, the star mark represents the initial feeding order stored in the feeding order storage unit 30.

First, the optimization execution unit 60 reads the initial feeding order stored in the feeding order storage unit 30 and performs single-objective optimization on the first objective function for the initial feeding order, by rearranging the product feeding order. Specifically, the optimization execution unit 60 performs a simulation using a line simulator on the feeding order after the rearrangement and arithmetically calculates the objective function for the simulation result. By regarding each feeding order as an individual, the optimization execution unit 60 performs single-objective optimization by an evolutionary algorithm. This will obtain a group of solutions of the feeding order having values better than the value of the first objective function in the initial feeding order, as a first solution. Note that, in the evolutionary algorithm, all the combinations in the feeding order will not be searched for the solution, but part of all the combinations will be searched for the solution. Hereinafter, when the optimization execution unit 60 performs single-objective optimization and multi-objective optimization, it is assumed that a simulation using a line simulator is performed and the objective function is arithmetically calculated for the simulation result.

For single-objective optimization, the simplex method, which is one of the linear programming methods, the Nelder-Mead method, which is one of the nonlinear programming methods, and the like can be used. The simplex method and the Nelder-Mead method are effective in shortening the computing time in single-objective optimization. In addition, the evolutionary algorithm and the local search method can also be used. These algorithms can also be used for multi-objective optimization. The evolutionary algorithms include the evolutionary strategy algorithm, the genetic algorithm, and the like. The local search methods include the simulated annealing method and the like.

Next, the optimization execution unit 60 performs single-objective optimization on the second objective function for the initial feeding order, by rearranging the product feeding order. This will obtain a group of solutions of the feeding order having values better than the value of the second objective function in the initial feeding order, as a second solution.

Next, the optimization execution unit 60 ranks the single-objective optimization results obtained in step S1 (step S2). Ranking means ordering from the one having the best value to a predetermined rank in order for the objective function. The ranked solution can be represented as P(n_rank). The type of objective function is denoted by "n", which is "1" for the first objective function. The rank when ordering is made from the best value for the first objective function is denoted by "rank". A solution P(1_1) is an optimal solution with the lowest production cost. A solution P(1_2), a solution P(1_3), ... are suboptimal solutions calculated until the optimal solution P(1_1) is obtained. Hereinafter, the solution P(1_1), the solution P(1_2), ... will be referred to as the first solution. As for the second objective function, an optimal solution P(2_1) with the shortest production completion time is obtained, and suboptimal solutions P(2_2), P(2_3), ... calculated until the optimal solution P(2_1) is obtained are obtained. Hereinafter, the solution P(2_1), the solution P(2_2), ... will be referred to as the second solution.

Note that, since the second objective function is not considered in the course of obtaining the first solution, variations are observed in the values of the second objective function for the first solution. Similarly, since the first objective function is not considered in the course of obtaining the second solution, variations are observed in the values of the first objective function for the second solution.

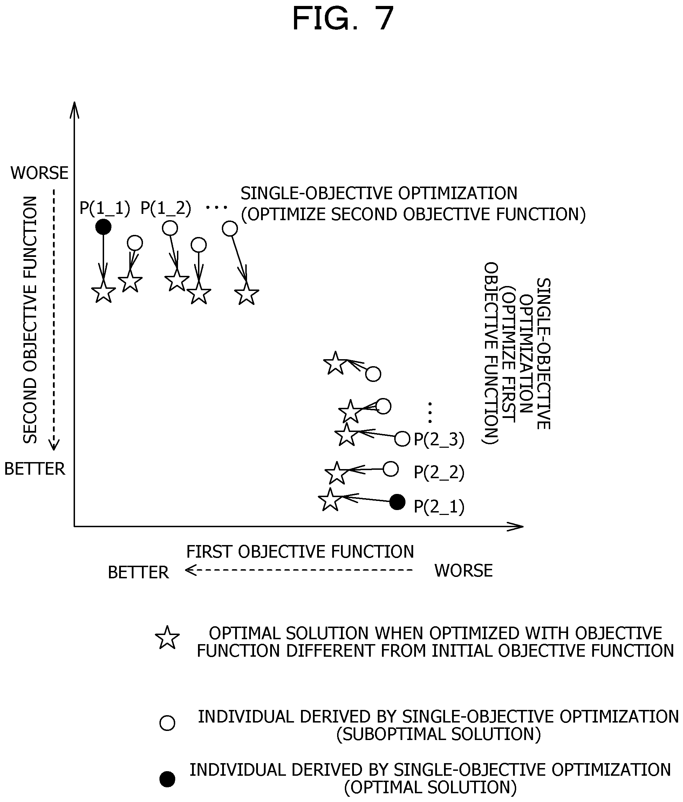

Next, the optimization execution unit 60 performs single-objective optimization on different objective functions for the first solution and the second solution (step S3). Specifically, the optimization execution unit 60 performs single-objective optimization using the evolutionary algorithm on the second objective function for the first solution (the solution P(1_1) to a solution P(1_i)) obtained by the single-objective optimization of the first objective function. In addition, the optimization execution unit 60 performs single-objective optimization using the evolutionary algorithm on the first objective function for the second solution (the solution P(2_1) to a solution P(2_j)) obtained by the single-objective optimization of the second objective function. In this case, i and j may have the same value or may be different. FIG. 7 is a diagram illustrating the result of single-objective optimization. For example, a solution P(1_1_1) that gives the best second objective function for the solution P(1_1) is obtained, and a solution P(1_2_1) that gives the best second objective function for the solution P(1_2) is obtained. In addition, a solution P(2_1_1) that gives the best first objective function for the solution P(2_1) is obtained, and a solution P(2_2_1) that gives the best first objective function for the solution P(2_2) is obtained.

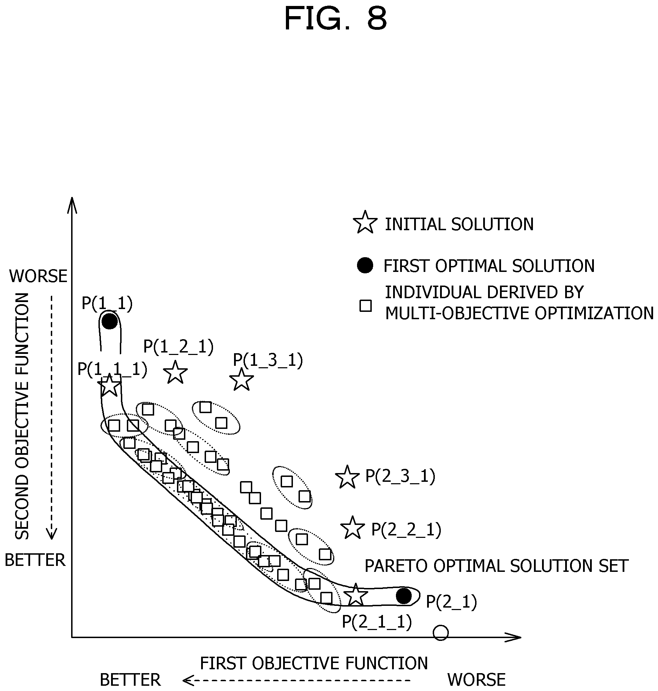

Next, the optimization execution unit 60 performs multi-objective optimization with single-objective third solution (solutions P(1_1_1) to P(1_i_1)) and fourth solution (solutions P(2_1_1) to P(2_j_1)), as an initial solution group (step S4). The evolutionary algorithm or the local search method can be used for multi-objective optimization. By executing multi-objective optimization, a plurality of individuals that are solutions may be obtained. When the genetic algorithm is used, a plurality of individuals that are solutions may be obtained according to the set number of generations. From among these individuals, a Pareto optimal solution set in which an evaluation function satisfies a predetermined condition may be obtained. FIG. 8 is a diagram illustrating a set of Pareto optimal solutions obtained in this case.

Note that the evaluation function is a function for evaluating a plurality of objective functions and, in the present embodiment, is a function obtained from the first objective function and the second objective function. The value of the evaluation function becomes better as each objective function becomes better.

The result output unit 70 transmits the Pareto optimal solutions obtained in step S4 to the server 200 via the transmission/reception unit 80. The reception unit 205 sends the Pareto optimal solutions transmitted from the transmission/reception unit 80 to the display unit 203. The display unit 203 displays the Pareto optimal solutions. This allows the user to grasp the objective functions targeted for search and the Pareto optimal solutions. The display unit 203 may be included in the information processing device 100.

According to the present embodiment, by performing single-objective optimization on the first objective function for the initial feeding order, the first solution (the solution P(1_1), the solution P(1_2), ...) having better values for the first objective function than the initial feeding order is obtained. In addition, the second solution (the solution P(2_1), the solution (2_2), ...) having better values for the second objective function than the initial feeding order is obtained. With these first and second solutions, in a plane (space) centered on the first objective function and the second objective function, the search range when performing multi-objective optimization will be narrowed within the range in which the first objective function and the second objective function become better. Note that long computing time is not involved when each case of single-objective optimization is performed. Performing multi-objective optimization from these first and second solutions makes the computing time shorter than when multi-objective optimization is performed from the initial feeding order. In addition, in the present embodiment, the solutions from the optimal solution to the predetermined rank are used for the first solution, but the solutions are not limited to this. Solutions that are better for the first objective function than the initial feeding order only have to be used. Similarly, the solutions from the optimal solution to the predetermined rank are used for the second solution, but the solutions are not limited to this. Solutions that are better for the second objective function than the initial feeding order only have to be used.

If a plurality of solutions from the one having the best value of the first objective function to a predetermined rank are used as the first solution, the search range when performing multi-objective optimization will be narrowed within the range in which the first objective function becomes better. Therefore, the time involved in search for the Pareto optimal solution group is made shorter. If a plurality of solutions from the one having the best value of the second objective function to a predetermined rank are used as the second solution, the search range when performing multi-objective optimization will be narrowed within the range in which the second objective function becomes better. Therefore, the time involved in search for the Pareto optimal solution group is made shorter.

By performing single-objective optimization on the second objective function for the first solution, the third solution (the solution P(1_1_1), the solution P(1_2_1), ...), which is better for the second objective function than the first solution, is obtained. By using the third solution, the search range when performing multi-objective optimization will be narrowed within the range in which the second objective function becomes better. Therefore, the time involved in search for the Pareto optimal solution group is made shorter. Note that, in the present embodiment, the optimal solutions for the first solution are obtained as the third solution, but the third solution is not limited to this. Solutions that give a better second objective function than the first solution only have to be obtained as the third solution. By performing single-objective optimization on the first objective function for the second solution, the fourth solution (the solution P(2_1_1), the solution P(2_2_1), ...), which is better for the first objective function than the second solution, is obtained. By using the fourth solution, the search range when performing multi-objective optimization will be narrowed within the range in which the first objective function becomes better. Therefore, the time involved in search for the Pareto optimal solution group is made shorter. Note that, in the present embodiment, the optimal solutions for the second solution are obtained as the fourth solution, but the fourth solution is not limited to this. Solutions that give a better first objective function than the second solution only have to be obtained as the fourth solution.

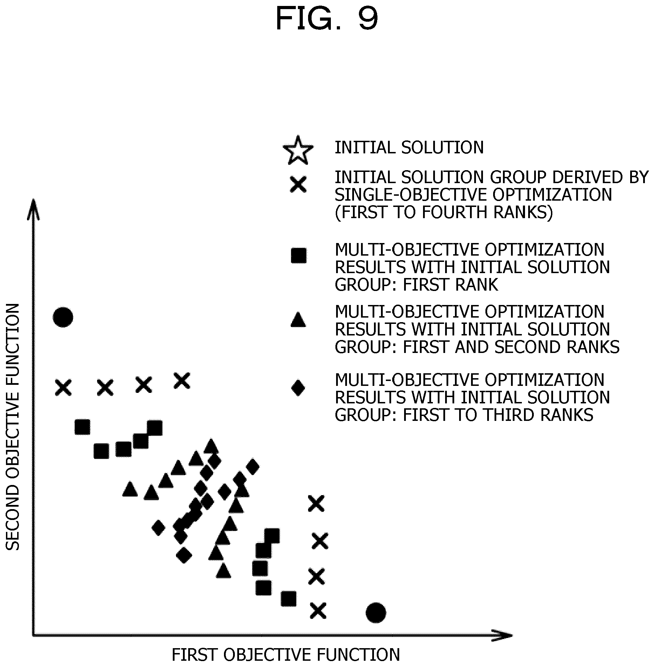

FIG. 9 is a diagram illustrating, in a simplified manner, an execution result of optimization of a feeding order plan when the number of products is assumed to be 100. By making the number of solutions in the initial solution group larger, the Pareto optimal solution set as the optimization result may cover individuals in many areas of the solution space, that is, solution candidates. When multi-objective optimization is executed with the single-objective optimization results at the first to third ranks as initial solutions, a Pareto optimal solution set equivalent to the Pareto optimal solution set when only the multi-objective optimization is executed may be obtained.

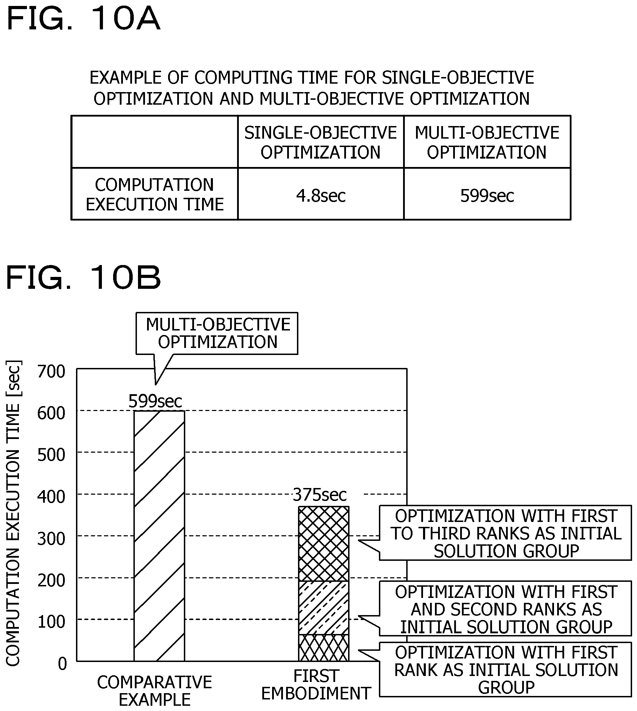

Next, the effect of shortening the computing time will be described. FIG. 10A indicates an example of the computing time for single-objective optimization and multi-objective optimization when a production line simulation is executed. It can be seen that, when there is a plurality of objective functions, 100 times or more of the computing time were taken. Single-objective optimization and multi-objective optimization were repeatedly executed while the number of solutions in the initial solution group is increased. FIG. 10B is a diagram indicating the result of that. As indicated in FIG. 10B, the execution time of the comparative example with only multi-objective optimization involves 599 seconds. In contrast to this, the total computing time to reach the multi-objective optimization with the initial solution group from the first rank to the third rank as in the first embodiment was 375 seconds. Therefore, in the first embodiment, it can be seen that the execution time may be reduced by 37% as compared with the comparative example.

### [Second Embodiment]

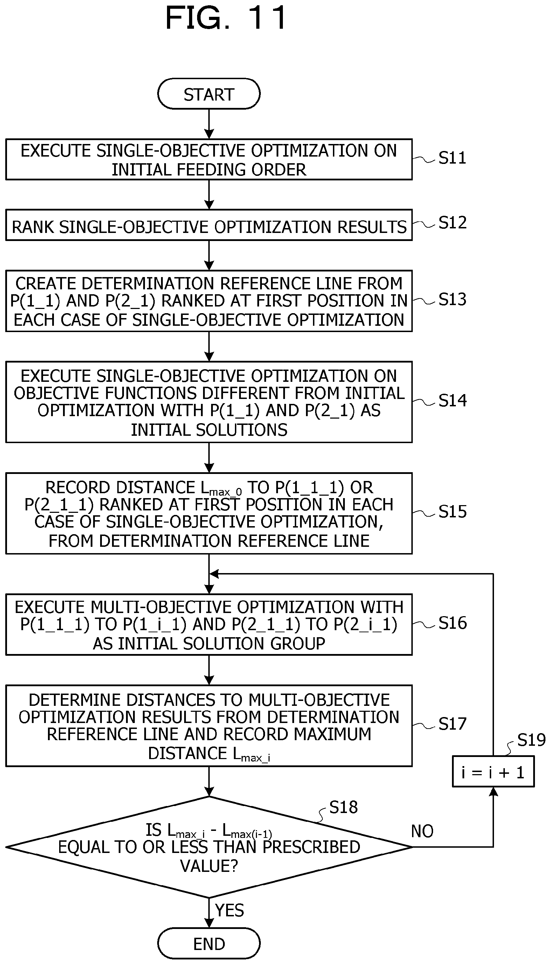

In the second embodiment, a convergence test is performed. FIG. 11 is a flowchart representing an example of an optimized Pareto solution calculation process according to the second embodiment. First, as in step S1 of the first embodiment, an optimization execution unit 60 executes single-objective optimization for each objective function (step S11). Next, as in step S2 of the first embodiment, the optimization execution unit 60 ranks the single-objective optimization results obtained in step S11 (step S12).

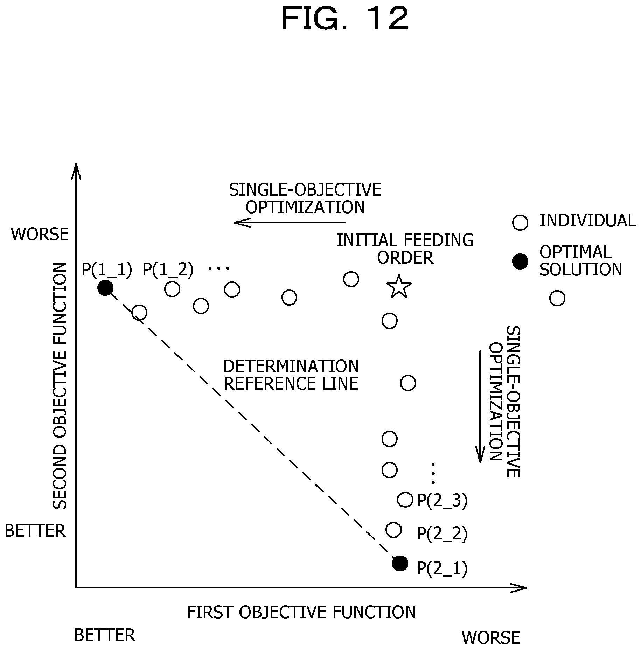

Next, the optimization execution unit 60 creates a determination reference line by approximating the solution P(1_1) and the solution P(2_1) ranked at the first position in each case of single-objective optimization with a straight line or a curve (step S13). In the example in FIG. 12, a straight line passing through the solution P(1_1) and the solution P(2_1) is created as a determination reference line. This determination reference line serves as a reference for creating a perpendicular line for determining whether or not execution solution candidates from the next step onward approach the Pareto optimal solution set.

Next, the optimization execution unit 60 performs single-objective optimization on the second objective function for the solution P(1_1) obtained for the first objective function. In addition, the optimization execution unit 60 performs single-objective optimization on the first objective function for the solution P(2_1) obtained for the second objective function (step S14).

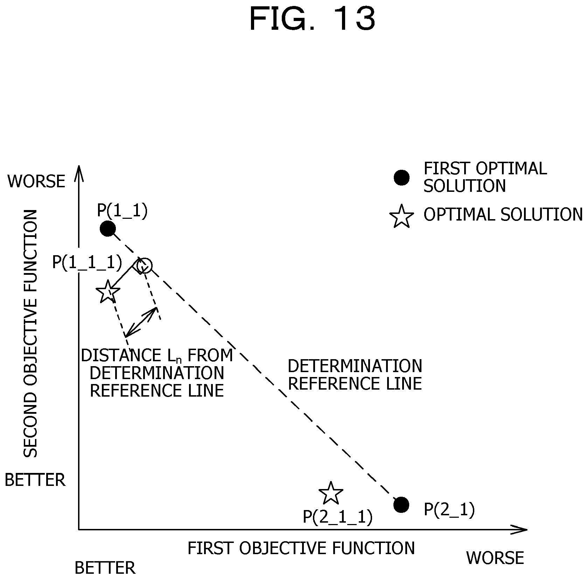

Next, the optimization execution unit 60 calculates the distances to the solution P(1_1_1) that gives the best second objective function for the solution P(1_1) and the solution P(2_1_1) that gives the best first objective function for the solution P(2_1), from the determination reference line. The optimization execution unit 60 records a longer distance among the two calculated distances, as an evaluation value L_{max_0} (step S15). In the example in FIG. 13, the distance between the solution P(1_1_1) and the determination reference line is recorded as the evaluation value L_{max_0}.

Next, the optimization execution unit 60 executes multi-objective optimization with the single-objective optimal solutions P(1_1_1) to P(1_i_1) and optimal solutions P(2_1_1) to P(2_i_1), as an initial solution group (step S16).

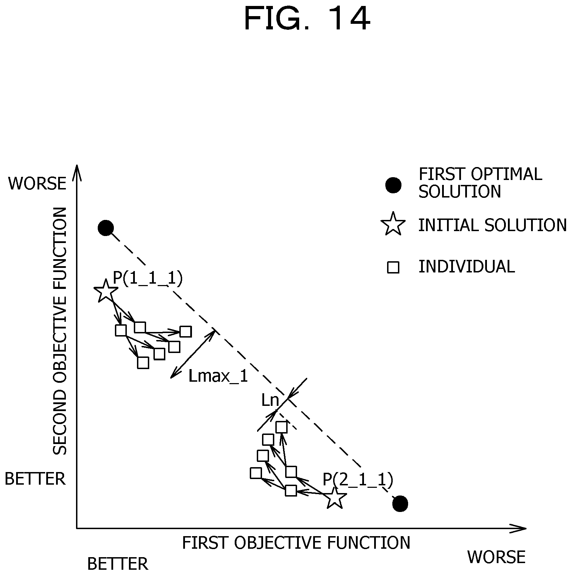

Next, the optimization execution unit 60 calculates distances Lₙ from the determination reference line for each solution obtained from the execution result and acquires a maximum distance L_{max_i}, which is the maximum among these calculated distances Lₙ (step S17). At the first execution of steps S16 and S17, "i" is one. In FIG. 14, the distances Lₙ are calculated for each solution obtained from the optimal solution P(1_1_1) and the optimal solution P(2_1_1).

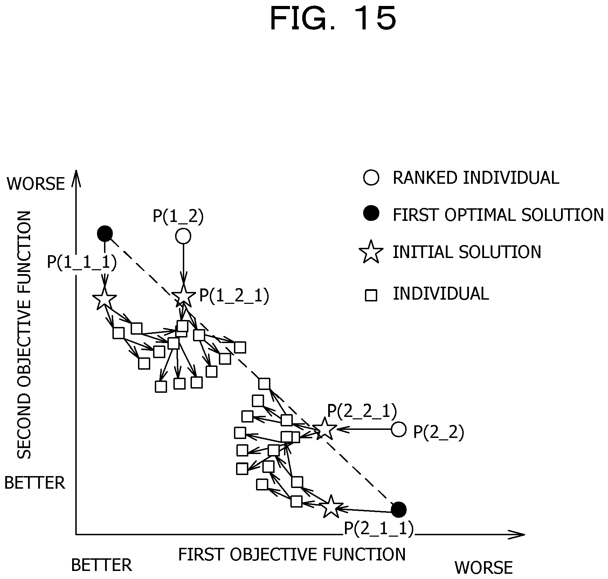

Next, the optimization execution unit 60 determines whether or not L_{max_i} - Lₘₐₓ₍ᵢ₋₁₎ is equal to or less than a prescribed value (step S18). When it is determined as "No" in step S18, the optimization execution unit 60 adds one to i (step S19). Thereafter, the process is again executed from step S16. In FIG. 15, the distances Lₙ are also calculated for each solution obtained from the solution P(1_2_1) and the optimal solution P(2_2_1), and the maximum distance Lₘₐₓ is acquired from among the calculated distances Lₙ.

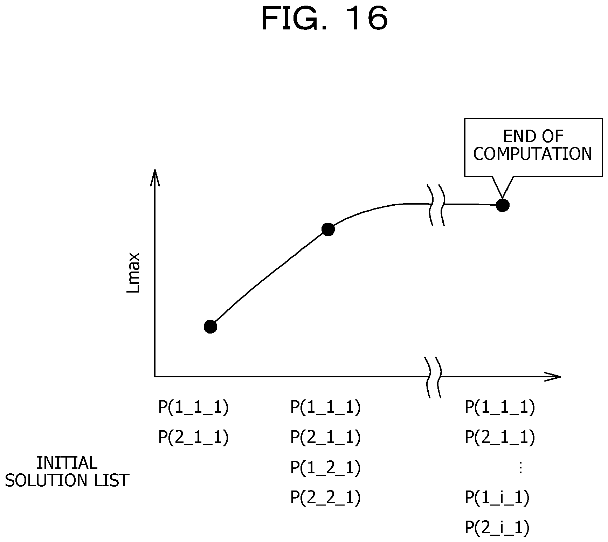

When it is determined as "Yes" in step S18, the execution of the flowchart ends. FIG. 16 is a diagram illustrating a case where Lₘₐₓ is monitored while the number of initial solutions is gradually increased, and the convergence test is performed.

After the end of the flowchart, the result output unit 70 transmits the Pareto optimal solutions obtained in last executed step S16, to the server 200 via the transmission/reception unit 80. The reception unit 205 sends the Pareto optimal solutions transmitted from the transmission/reception unit 80 to the display unit 203. The display unit 203 displays the Pareto optimal solutions. This allows the user to grasp the objective functions targeted for search and the Pareto optimal solutions.

According to the present embodiment, multi-objective optimization is performed for the third solution in order from the best solution of the first objective function, and for the fourth solution in order from the best solution of the second objective function. In this case, multi-objective optimization ends when, for the results of multi-objective optimization performed sequentially, the amount of increase in the distance from the determination reference line becomes equal to or less than a threshold value. According to this configuration, a sufficient number of solutions in the Pareto optimal solution group may be obtained without involving extra computing time.

### [Third Embodiment]

In a third embodiment, a production rescheduling method utilizing computation execution time data will be described. For example, when there is a device failure or the addition of a rush order product, there are cases where optimization is executed again and the feeding order is adjusted. When the order of production orders is created according to the procedure of the first or second embodiment before the start of production, the execution time of single-objective optimization and the time taken for multi-objective optimization during the iterative computation are acquired. This enables the presentation of the computation execution time for rescheduling when rescheduling is performed.

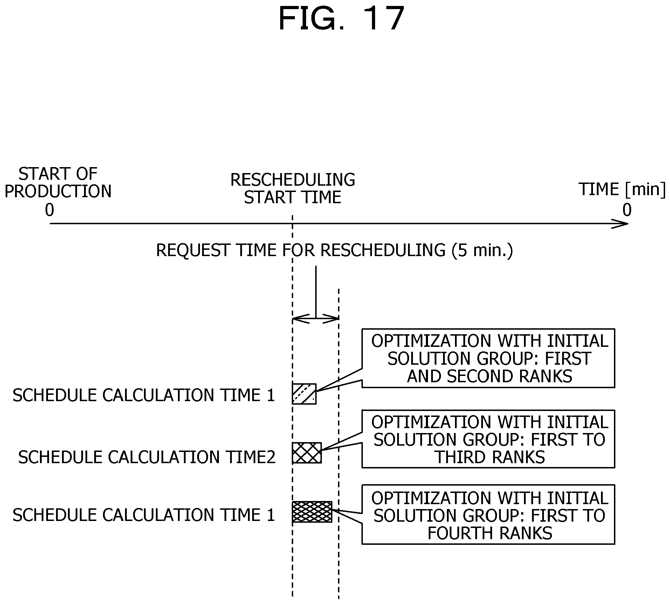

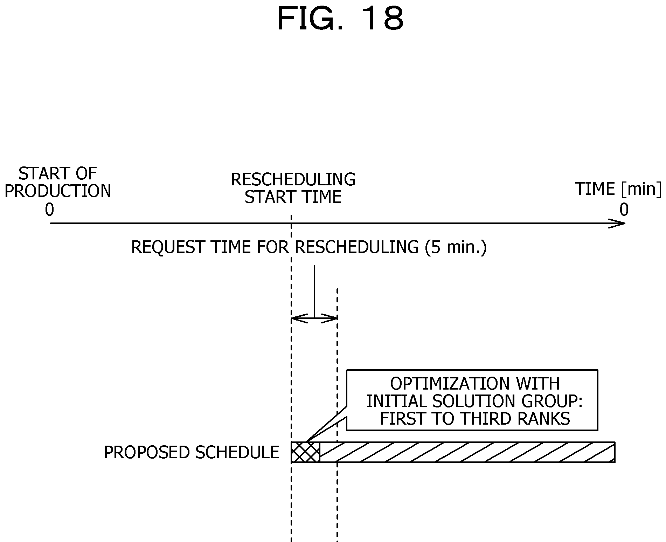

FIGs. 17 and 18 are diagrams illustrating an image of rescheduling in a Gantt chart format. The horizontal axis denotes a time axis from the start to the end of production, and the scheduling time from the rescheduling time point is displayed as a list. For example, when a schedule administrator who uses the system wants to display the schedule with request time of five minutes for rescheduling, the schedule administrator make a selection from the list of computing time taken at the time of the initial scheduling. Generally, a better execution solution will be output with longer time taken. In this case, when an item that will complete rescheduling in about three minutes is selected, the computation is executed, and a rescheduled feeding order may be acquired. The rescheduled feeding order may be efFectively utilized when it is desired to operate the device within fixed time in the production process or when there are restrictions such as deterioration of the product itself.

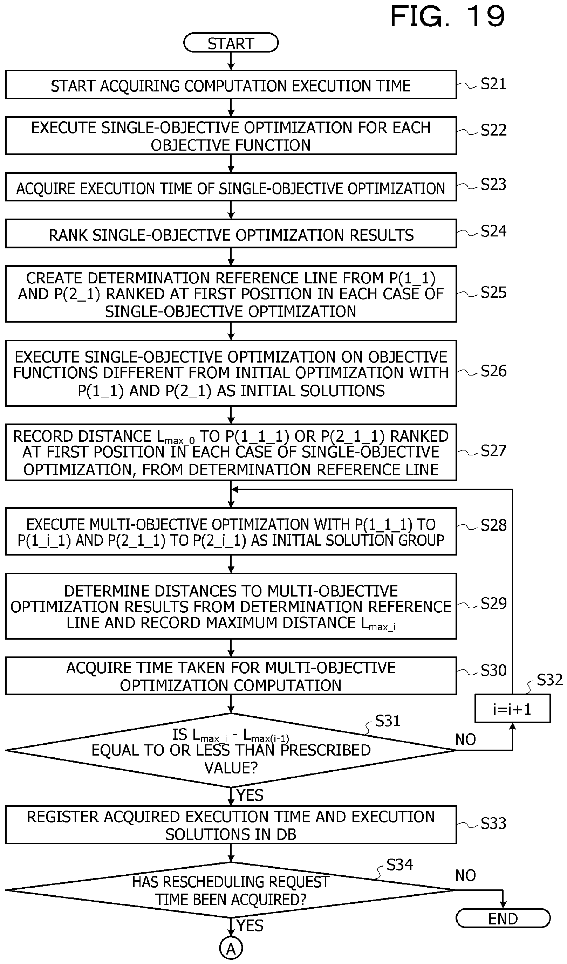

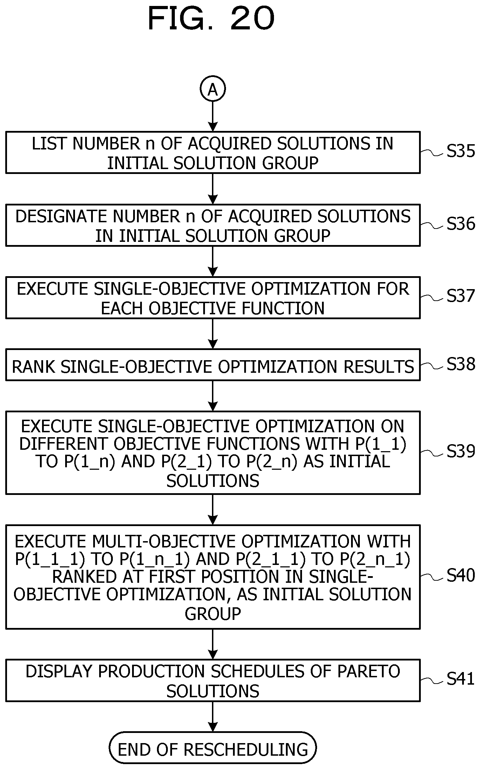

FIGs. 19 and 20 are a flowchart representing an example of an optimized Pareto solution calculation process according to the third embodiment. As illustrated in FIGs. 19 and 20, an optimization execution unit 60 starts acquiring the computation execution time (step S21). For example, the optimization execution unit 60 executes a timer function.

Next, as in step S11 of the second embodiment, the optimization execution unit 60 executes single-objective optimization for each objective function (step S22). Next, the optimization execution unit 60 acquires the execution time involved in executing single-objective optimization (step S23). Next, as in step S12 of the second embodiment, the optimization execution unit 60 ranks the single-objective optimization results obtained in step S22 (step S24).

Next, as in step S13 of the second embodiment, the optimization execution unit 60 creates a determination reference line by approximating the solution P(1_1) and the solution P(2_1) ranked at the first position in each case of single-objective optimization with a straight line or a curve (step S25). Next, as in step S14 of the second embodiment, the optimization execution unit 60 performs single-objective optimization on the second objective function for the solution P(1_1) obtained for the first objective function. In addition, the optimization execution unit 60 performs single-objective optimization on the first objective function for the solution P(2_1) obtained for the second objective function (step S26).

Next, as in step S15 of the second embodiment, the optimization execution unit 60 calculates the distances to the solution P(1_1_1) that gives the best second objective function for the solution P(1_1) and the solution P(2_1_1) that gives the best first objective function for the solution P(2_1), from the determination reference line. The optimization execution unit 60 records a longer distance among the two calculated distances, as an evaluation value L_{max_0} (step S27).

Next, as in step S16 of the second embodiment, the optimization execution unit 60 executes multi-objective optimization with the single-objective optimal solutions P(1_1_1) to P(1_i_1) and optimal solutions P(2_1_1) to P(2_i_1), as an initial solution group (step S28). Next, the optimization execution unit 60 calculates distances Lₙ from the determination reference line for each solution obtained from the execution result and acquires a maximum distance L_{max_i}, which is the maximum among these calculated distances Lₙ (step S29). Next, the optimization execution unit 60 acquires the execution time involved in executing the multi-objective optimization computation in step S28 (step S30). At the first execution of steps S28 to S30, "i" is one.

Next, the optimization execution unit 60 determines whether or not L_{max_i} - Lₘₐₓ₍ᵢ₋₁₎ is equal to or less than a prescribed value (step S31). When it is determined as "No" in step S31, the optimization execution unit 60 adds one to i (step S32). Thereafter, the process is again executed from step S28.

When it is determined as "Yes" in step S31, the optimization execution unit 60 stores the acquired execution time and execution solutions in a computation execution time storage unit 40 (step S33). For example, the computation execution time storage unit 40 stores the time involved in multi-objective optimization of the solution P(1_1_1) and the solution P(2_1_1), the time involved in multi-objective optimization of the solution P(1_1_1) to the solution P(1_2_1) and the solution P(2_1_1) to the solution P(2_2_1), ..., and the time involved in multi-objective optimization of the solution P(1_1_1) to the solution P(1_i_1) and the solution P(2_1_1) to the solution P(2 i_1).

Next, the optimization execution unit 60 determines whether or not rescheduling request time has been acquired (step S34). For example, when an alarm is input to the transmission/reception unit 80 of the information processing device 100 from the product information input unit 201 via the transmission unit 204, or when device failure information or the like is input from the constraint condition input unit 202, the optimization execution unit 60 instructs the user to input the rescheduling request time on the display unit 203 via the transmission/reception unit 80. The user inputs the rescheduling request time by an input device (not illustrated) or the like. When it is determined as "No" in step S34, the execution of the flowchart ends.

When it is determined as "Yes" in step S34, the optimization execution unit 60 lists the number n of acquired solutions in the initial solution group that satisfy the rescheduling request time (step S35). Next, the optimization execution unit 60 designates the number n of acquired solutions in the initial solution group (step S36).

Next, as in step S22, the optimization execution unit 60 executes single-objective optimization for each objective function (step S37). Next, as in step S24, the optimization execution unit 60 ranks the single-objective optimization results obtained in step S37 (step S38). Next, the optimization execution unit 60 executes single-objective optimization on the second objective function with the solution P(1_1) to the solution P(1_n) as initial solutions, and executes single-objective optimization on the first objective function with the solution P(2_1) to the solution P(2_n) as initial solutions (step S39).

Next, the optimization execution unit 60 executes multi-objective optimization with the single-objective optimal solutions P(1_1_1) to P(1_n_1) and optimal solutions P(2_1_1) to P(2_n_1), as an initial solution group (step S40). Next, the result output unit 70 transmits the production schedules of the Pareto solutions to the server 200 via the transmission/reception unit 80 (step S41). Thereafter, the execution of the flowchart ends. The reception unit 205 sends the Pareto optimal solutions transmitted from the transmission/reception unit 80 to the display unit 203. The display unit 203 displays the Pareto optimal solutions. This allows the user to grasp the objective functions targeted for search and the Pareto optimal solutions.

Note that, when it is determined as "No" in step S34, the result output unit 70 transmits the Pareto optimal solutions obtained in last executed step S28, to the server 200 via the transmission/reception unit 80 after the end of the flowchart.

According to the present embodiment, the feeding order is searched for such that the request time when searching for rescheduling is satisfied.

### (Hardware Configuration)

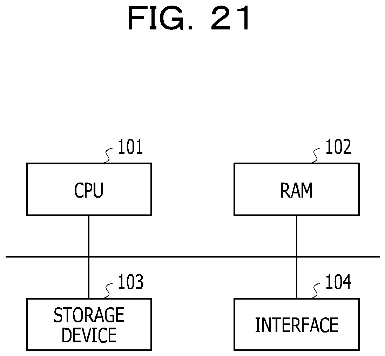

FIG. 21 is a block diagram illustrating a hardware configuration of each unit of the information processing device 100. As illustrated in FIG. 21, the information processing device 100 includes a central processing unit (CPU) 101, a random access memory (RAM) 102, a storage device 103, an interface 104, and the like.

The central processing unit (CPU) 101 is a central processing unit. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. For example, a read only memory (ROM), a solid state drive (SSD) such as a flash memory, a hard disk to be driven by a hard disk drive, or the like may be used as the storage device 103. The storage device 103 stores the work plan specifying program. The interface 104 is an interface device with an external device. Each unit of the information processing device 100 is implemented by the CPU 101 executing the work plan specifying program. Note that hardware such as a dedicated circuit may be used as each unit of the information processing device 100.

In each of the above examples, the production line is an example of a work line in which a plurality of objects is processed in a predetermined order, a plurality of works is performed in order on each of the plurality of objects, and at least part of the works among the plurality of works are different from each other between the plurality of objects. The product is an example of the object. The optimization execution unit 60 is an example of an execution unit that, by executing single-objective optimization on a first objective function among a plurality of objective functions defined according to feeding orders of the plurality of objects into the work line, specifies first feeding orders in which values of the first objective function are better than an initial feeding order; by executing the single-objective optimization on a second objective function, specifies second feeding orders in which the values of the second objective function are better than the initial feeding order; and executes multi-objective optimization on the plurality of objective functions by using the first feeding orders and the second feeding orders. The computation execution time storage unit 40 is an example of an execution time storage unit that stores the execution time when the multi-objective optimization is executed.

While the embodiments of the present invention have been described above in detail, the present invention is not limited to such specific embodiments, and various modifications and alterations may be made within the scope of the present invention described in the claims.

### REFERENCE SIGNS LIST

- 10: Production line model storage unit
- 20: Production master
- 30: Feeding order storage unit
- 40: Computation execution time storage unit
- 50: Objective function setting unit
- 60: Optimization execution unit
- 70: Result output unit
- 80: Transmission/reception unit
- 100: Information processing device
- 200: Server
- 201: Product information input unit
- 202: Constraint condition input unit
- 203: Display unit
- 204: Transmission unit
- 205: Reception unit

## Claims

1. An information processing device that specifies a predetermined order under conditions that a plurality of objects is processed in a work line in the predetermined order, a plurality of works is performed in order on each of the plurality of objects in the work line, and at least part of the works among the plurality of works are different from each other between the plurality of objects,
the information processing device comprising an execution unit that: by executing single-objective optimization on a first objective function among a plurality of objective functions defined according to feeding orders of the plurality of objects into the work line, specifies first feeding orders in which values of the first objective function are better than an initial feeding order; by executing the single-objective optimization on a second objective function, specifies second feeding orders in which the values of the second objective function are better than the initial feeding order; and executes multi-objective optimization on the plurality of objective functions by using the first feeding orders and the second feeding orders.

2. The information processing device according to claim 1, wherein the execution unit specifies a plurality of feeding orders that have best values of the first objective function as the first feeding orders.

3. The information processing device according to claim 1 or 2, wherein the execution unit specifies third feeding orders in which the values of the second objective function are enhanced, by executing the single-objective optimization on the second objective function for the first feeding orders with an evolutionary algorithm, and executes the multi-objective optimization on the plurality of objective functions with the evolutionary algorithm, by using the obtained third feeding orders.

4. The information processing device according to claim 3, wherein the execution unit sets boundaries that pass through the feeding orders that have the best values of the first objective function among the first feeding orders and the feeding orders that have the best values of the second objective function among the second feeding orders, in coordinates centered on each of the first objective function the second objective function, performs the multi-objective optimization in order on the third feeding orders from one that has one of the best values of the first objective function, and ends the multi-objective optimization for the third feeding orders according to distances to results of the multi-objective optimization for the third feeding orders from the boundaries.

5. The information processing device according to any one of claims 1 to 4, comprising an execution time storage unit that stores execution time when the multi-objective optimization is executed, wherein
the execution unit re-executes the multi-objective optimization such that input request time is satisfied.

6. A work plan specifying method that specifies a predetermined order under conditions that a plurality of objects is processed in a work line in the predetermined order, a plurality of works is performed in order on each of the plurality of objects in the work line, and at least part of the works among the plurality of works are different from each other between the plurality of objects, the work plan specifying method comprising
by executing single-objective optimization on a first objective function among a plurality of objective functions defined according to feeding orders of the plurality of objects into the work line, specifying first feeding orders in which values of the first objective function are better than an initial feeding order;
by executing the single-objective optimization on a second objective function, specifying second feeding orders in which the values of the second objective function are better than the initial feeding order; and
executing multi-objective optimization on the plurality of objective functions by using the first feeding orders and the second feeding orders.

7. The work plan specifying method according to claim 6, further comprising
specifying a plurality of feeding orders that have best values of the first objective function as the first feeding orders.

8. The work plan specifying method according to claim 6 or 7, further comprising:
specifying third feeding orders in which the values of the second objective function are enhanced, by executing the single-objective optimization on the second objective function for the first feeding orders with an evolutionary algorithm; and
executing the multi-objective optimization on the plurality of objective functions with the evolutionary algorithm, by using the obtained third feeding orders.

9. The work plan specifying method according to claim 8, further comprising:
setting boundaries that pass through the feeding orders that have the best values of the first objective function among the first feeding orders and the feeding orders that have the best values of the second objective function among the second feeding orders, in coordinates centered on each of the first objective function the second objective function;
performing the multi-objective optimization in order on the third feeding orders from one that has one of the best values of the first objective function; and
ending the multi-objective optimization for the third feeding orders according to distances to results of the multi-objective optimization for the third feeding orders from the boundaries.

10. The work plan specifying method according to any one of claims 6 to 9, further comprising:
storing execution time when the multi-objective optimization is executed; and
re-executing the multi-objective optimization such that input request time is satisfied.

11. A work plan specifying program that specifies a predetermined order under conditions that a plurality of objects is processed in a work line in the predetermined order, a plurality of works is performed in order on each of the plurality of objects in the work line, and at least part of the works among the plurality of works are different from each other between the plurality of objects, the work plan specifying program causing a computer to execute a process, the process comprising:
by executing single-objective optimization on a first objective function among a plurality of objective functions defined according to feeding orders of the plurality of objects into the work line, specifying first feeding orders in which values of the first objective function are better than an initial feeding order;
by executing the single-objective optimization on a second objective function, specifying second feeding orders in which the values of the second objective function are better than the initial feeding order; and
executing multi-objective optimization on the plurality of objective functions by using the first feeding orders and the second feeding orders.

12. The work plan specifying program according to claim 11, wherein the process further comprising
specifying a plurality of feeding orders that have best values of the first objective function as the first feeding orders.

13. The work plan specifying program according to claim 11 or 12, wherein the process further comprising:
specifying third feeding orders in which the values of the second objective function are enhanced, by executing the single-objective optimization on the second objective function for the first feeding orders with an evolutionary algorithm; and
executing the multi-objective optimization on the plurality of objective functions with the evolutionary algorithm, by using the obtained third feeding orders.

14. The work plan specifying program according to claim 13, wherein the process further comprising:
setting boundaries that pass through the feeding orders that have the best values of the first objective function among the first feeding orders and the feeding orders that have the best values of the second objective function among the second feeding orders, in coordinates centered on each of the first objective function the second objective function;
performing the multi-objective optimization in order on the third feeding orders from one that has one of the best values of the first objective function; and
ending the multi-objective optimization for the third feeding orders according to distances to results of the multi-objective optimization for the third feeding orders from the boundaries.

15. The work plan specifying program according to any one of claims 11 to 14, wherein the process further comprising:
storing execution time when the multi-objective optimization is executed; and
re-executing the multi-objective optimization such that input request time is satisfied.
